(19) Europäisches Patentamt / European Patent Office / Office européen des brevets

(11) **EP 4 765 250 A1**

(12) **EUROPEAN PATENT APPLICATION**
published in accordance with Art. 153(4) EPC

(43) Date of publication:
**24.06.2026 Bulletin 2026/26**

(21) Application number: **25860925.4**

(22) Date of filing: **29.08.2025**

(51) International Patent Classification (IPC):
**H01M 4/525** (2010.01)     **H01M 4/505** (2010.01)
**H01M 4/131** (2010.01)     **H01M 10/052** (2010.01)
**H01M 4/02** (2006.01)

(52) Cooperative Patent Classification (CPC):
**C01G 53/50; H01M 4/02; H01M 4/131; H01M 4/505; H01M 4/525; H01M 10/052;** Y02E 60/10

(86) International application number:
**PCT/KR2025/013315**

(87) International publication number:
**WO 2026/049567 (05.03.2026 Gazette 2026/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **29.08.2024 KR 20240117211**

(71) Applicant: **LG Energy Solution, Ltd.**
**Seoul 07335 (KR)**

(72) Inventors:
• **YUN, So Yeong**
  **Daejeon 34122 (KR)**
• **KIM, Ji Hye**
  **Daejeon 34122 (KR)**
• **HEO, Jong Wook**
  **Daejeon 34122 (KR)**
• **LEE, Si Yeol**
  **Daejeon 34122 (KR)**
• **KIM, Seong Bae**
  **Daejeon 34122 (KR)**

(74) Representative: **Hoffmann Eitle**
**Patent- und Rechtsanwälte PartmbB**
**Arabellastraße 30**
**81925 München (DE)**

(54) **POSITIVE ELECTRODE ACTIVE MATERIAL PRECURSOR, MANUFACTURING METHOD THEREOF, POSITIVE ELECTRODE ACTIVE MATERIAL, POSITIVE ELECTRODE, AND ELECTROCHEMICAL DEVICE**

(57)    The present invention provides a positive electrode active material including at least one of a single particle composed of one nodule and a pseudo-single particle that is a composite of 30 or less nodules, wherein a degree of single crystal formation defined by Equation (A) is 2.7 or more.

$$\text{Equation (A): Degree of single crystal formation} = \frac{\sum_{i=1}^{n} \frac{4\pi}{3} \times R_i^3}{n}$$

In Equation (A), $R_i$ is a radius of an $i^{th}$ grain which is measured when an electrode prepared by using the positive electrode active material is subjected to an ion-milling treatment and a cross-section of the electrode is then analyzed by electron backscatter diffraction (EBSD), wherein $R_i$ is a value measured in $\mu m$ units, but a value substituted into Equation (A) is a unitless number that does not include units, and n is the total number of grains measured by the electron backscatter diffraction (EBSD) analysis.

**Description**

## TECHNICAL FIELD

Cross-reference to Related Applications

This application claims the benefit of priority from Korean Patent Application No. 10-2024-0117211, filed on August 29, 2024, the disclosure of which is incorporated by reference herein.

Technical Field

The present invention relates to a positive electrode active material precursor, a method of preparing the same, a positive electrode active material, a positive electrode, and an electrochemical device.

## BACKGROUND ART

Recently, with the rapid spread of electronic devices using batteries, such as mobile phones, notebook computers, and electric vehicles, demand for secondary batteries with relatively high capacity as well as small size and lightweight has been rapidly increased. Particularly, since a lithium secondary battery is lightweight and has high energy density, the lithium secondary battery is in the spotlight as a driving power source for portable devices. Accordingly, research and development efforts for improving the performance of the lithium secondary battery have been actively conducted.

In the lithium secondary battery in a state in which an organic electrolyte solution or a polymer electrolyte solution is filled between a positive electrode and a negative electrode which are respectively formed of active materials capable of intercalating and deintercalating lithium ions, electrical energy is produced by oxidation and reduction reactions when the lithium ions are intercalated/deintercalated into/from the positive electrode and the negative electrode.

Lithium cobalt oxide ($LiCoO_2$), lithium nickel oxide ($LiNiO_2$), lithium manganese oxide ($LiMnO_2$ or $LiMn_2O_4$), or a lithium iron phosphate compound ($LiFePO_4$) has been used as a positive electrode active material of the lithium secondary battery. Among them, the lithium cobalt oxide ($LiCoO_2$) has been widely used because it has an advantage of high operating voltage and excellent capacity characteristics, and has been used as a positive electrode active material for high voltage. However, due to an increase in the price of cobalt (Co) and supply instability, there is a limitation in using a large amount of the lithium cobalt oxide as a power source for applications such as electric vehicles, and thus, there is a need to develop a positive electrode active material that may replace the lithium cobalt oxide.

Accordingly, a nickel cobalt manganese-based lithium composite transition metal oxide, in which a portion of cobalt (Co) is substituted with nickel (Ni) and manganese (Mn), has been developed. A conventional lithium nickel cobalt manganese oxide was generally in a form of a spherical secondary particle in which tens to hundreds of primary particles were aggregated. However, with respect to the lithium nickel cobalt manganese oxide in the form of a secondary particle in which many primary particles are aggregated as described above, there is a problem in that particle breakage, in which the primary particles fall off in a rolling process during preparation of the positive electrode, is likely to occur and cracks occur in the particles during charge and discharge. In a case in which the particle breakage or cracking of the positive electrode active material occurs, since a contact area with an electrolyte solution is increased, there is a problem in that active material degradation and gas generation due to a side reaction with the electrolyte solution are increased and, as a result, life characteristics are degraded.

In order to solve the above-described problem, a technique of preparing a positive electrode active material in a form of a single particle or a pseudo-single particle rather than a secondary particle by increasing sintering temperature during preparation of the lithium nickel cobalt manganese oxide has been proposed. With respect to the positive electrode active material in the form of a single particle or a pseudo-single particle, since a contact area with the electrolyte solution is smaller than that of the conventional positive electrode active material in the form of a secondary particle, there is less side reaction with the electrolyte solution, and there is less particle breakage during the preparation of the electrode due to excellent particle strength. Thus, in a case in which the positive electrode active material in the form of a single particle or a pseudo-single particle is used, there is an advantage of excellent gas generation and life characteristics.

However, since the positive electrode active material in the form of a single particle or a pseudo-single particle is prepared by over-sintering at high temperatures, it has a problem that there are many defects within a crystal structure and strain is high. In a case in which there are high strain and defects within the crystal structure, since movement of lithium ions is non-uniform so that local intercalation/deintercalation of the lithium ions occurs, there is a problem in that degradation of the crystal structure is accelerated.

## DISCLOSURE OF THE INVENTION

**TECHNICAL PROBLEM**

An aspect of the present invention provides a positive electrode active material precursor capable of forming a positive electrode active material having improved sintering uniformity.

Also, another aspect of the present invention provides a positive electrode active material which is prepared from the above positive electrode active material precursor and includes at least one of a single particle or a pseudo-single particle having excellent output characteristics and life characteristics.

Also, another aspect of the present invention provides a positive electrode and an electrochemical device in which energy density per unit volume is excellent and output characteristics and high-temperature life characteristics are excellent by using the above positive electrode active material.

**TECHNICAL SOLUTION**

[1] The present invention provides a positive electrode active material including at least one of a single particle composed of one nodule and a pseudo-single particle that is a composite of 30 or less nodules, wherein a degree of single crystal formation defined by Equation (A) is 2.7 or more.

$$\text{Equation (A): Degree of single crystal formation} =$$

$$\frac{\sum_{i=1}^{n} \frac{4\pi}{3} \times R_i^3}{n}$$

In Equation (A), $R_i$ is a radius of an $i^{th}$ grain which is measured when an electrode prepared by using the positive electrode active material is subjected to an ion-milling treatment and a cross-section of the electrode is analyzed by electron backscatter diffraction (EBSD), wherein $R_i$ is a value measured in $\mu$m units, but a value substituted into Equation (A) is a unitless number that does not include units, and n is the total number of grains measured by the electron backscatter diffraction (EBSD) analysis.

[2] The present invention provides the positive electrode active material of [1] above, wherein the degree of single crystal formation is 2.8 or more.

[3] The present invention provides the positive electrode active material of [1] or [2] above, wherein the degree of single crystal formation is 3.2 or more.

[4] The present invention provides the positive electrode active material of at least one of [1] to [3] above, wherein a degree of single particle formation defined by Equation (B) is 0.65 or more.

$$\text{Equation (B): Degree of single particle formation} =$$

$$\frac{\sum_{i=1}^{n} \frac{4\pi}{3} \times R_i^3}{n} \times \frac{1}{D_{50}}$$

In Equation (B), $R_i$ is a radius of an $i^{th}$ grain which is measured when an electrode prepared by using the positive electrode active material is subjected to an ion-milling treatment and a cross-section of the electrode is analyzed by electron backscatter diffraction (EBSD), wherein $R_i$ is a value measured in $\mu$m units, but a value substituted into Equation (B) is a unitless number that does not include units, n is the total number of grains measured by the electron backscatter diffraction (EBSD) analysis, and $D_{50}$ is $D_{50}$ of the positive electrode active material, and is a value measured in $\mu$m units, but a value substituted into Equation (B) is a unitless number that does not include units.

[5] The present invention provides the positive electrode active material of at least one of [1] to [4] above, wherein the degree of single particle formation is 0.75 or more.

[6] The present invention provides the positive electrode active material of at least one of [1] to [5] above, wherein nickel among total metals excluding lithium is included in an amount of 50 mol% or more.

[7] The present invention provides the positive electrode active material of at least one of [1] to [6] above, wherein I(003)/I(104) is 1.24 or more.

[8] The present invention provides a positive electrode including the positive electrode active material of at least one of [1] to [7] above.

[9] The present invention provides an electrochemical device including the positive electrode of [8] above.

[10] The present invention provides a positive electrode active material precursor having a Brunauer-Emmett-Teller (BET) specific surface area of greater than 16 $m^2$/g, a SPAN defined by Equation (C) of 0.7 or less, and a pore area ratio (PAR) of 10% to 30%.

$$\text{Equation (C): SPAN} = (D_{90} - D_{10})/D_{50}$$

In Equation (C), $D_{90}$ represents a particle diameter at 90% of cumulative distribution of volume according to the particle diameter of the positive electrode active material precursor which is measured by laser diffraction, $D_{50}$ represents a particle diameter at 50% of the cumulative distribution of volume according to the particle diameter of the positive electrode active material precursor which is measured by laser diffraction, and $D_{10}$ represents a particle diameter at 10% of the cumulative distribution of volume according to the particle diameter of the positive electrode active material precursor which is measured by laser diffraction.

[11] The present invention provides the positive electrode active material precursor of [10] above, wherein the BET specific surface area is in a range of 18 $m^2$/g to 27 $m^2$/g.

[12] The present invention provides positive electrode active material precursor of [10] or [11] above, wherein the BET specific surface area is in a range of 19 $m^2$/g to 25 $m^2$/g.

[13] The present invention provides the positive electrode active material precursor of at least one of [10] to [12] above, wherein the SPAN is in a range of 0.20 to 0.60.

[14] The present invention provides the positive electrode active material precursor of at least one of [10] to [13] above, wherein the SPAN is in a range of 0.40 to 0.54.

[15] The present invention provides the positive electrode active material precursor of at least one of [10] to [14] above, wherein the pore area ratio (PAR) is in a range of 17% to 30%.

[16] The present invention provides the positive electrode active material precursor of at least one of [10] to [15] above, wherein the pore area ratio (PAR) is in a range of 19% to 29%.

[17] The present invention provides the positive electrode active material precursor of at least one of [10] to [16] above, wherein nickel among total metals is included in an amount of 50 mol% or more.

[18] The present invention provides the positive electrode active material precursor of at least one of [10] to [17] above, wherein the average particle diameter $D_{50}$ is greater than 2.0 $\mu$m and equal to or less than 5.0 $\mu$m.

[19] The present invention provides a method of preparing a positive electrode active material precursor which includes: a first step of forming positive electrode active material precursor nuclei by performing a co-precipitation reaction while supplying a transition metal-containing solution, an ammonium cationic complexing agent, and a basic solution to a reactor; and a second step of growing positive electrode active material precursor particles by performing a co-precipitation reaction while supplying a transition metal-containing solution, an ammonium complexing agent, and a basic solution to a reaction solution in which the positive electrode active material precursor nuclei have been formed, wherein the ammonium cationic complexing agent in the first step is supplied at a flow rate of 6 mL/hr to 11 mL/hr, and a pH of the reaction solution in the second step is 11.4 or more.

[20] The present invention provides the method of [19] above, wherein the transition metal-containing solution in the second step is supplied at a flow rate of 730 mL/hr or less.

[21] The present invention provides the method of [19] or [20] above, wherein the second step is performed for 33 hours or more.

**ADVANTAGEOUS EFFECTS**

Since a positive electrode active material precursor of the present invention has a uniform particle size distribution by controlling a SPAN value, it may uniformly react with lithium, and thus, it has an effect of reducing defects and strain in a structure of a positive electrode active material prepared after sintering.

The positive electrode active material precursor of the present invention may prepare a positive electrode active material including at least one of a single particle or a pseudo-single particle without relatively increasing sintering temperature by controlling a Brunauer-Emmett-Teller (BET) specific surface area to increase reactivity with a lithium raw material. Accordingly, it may reduce defects and strain in the structure of the positive electrode active material which occur when exposed to high temperatures for a long time.

The positive electrode active material precursor of the present invention may prepare a positive electrode active material including at least one of a single particle or a pseudo-single particle without relatively increasing the sintering temperature by controlling a pore area ratio (PAR) to facilitate crystal growth. Accordingly, it may provide a positive electrode active material having a high degree of single particle formation while reducing defects and strain in the structure of the positive electrode active material.

A positive electrode active material of the present invention is prepared by using the above positive electrode active material precursor. Since the positive electrode active material of the present invention includes at least one of a single particle and a pseudo-single particle and has a degree of single crystal formation satisfying a specific range, particle strength is excellent, structural stability is excellent, and defects and strain in the structure may be reduced.

A positive electrode and an electrochemical device of the present invention may have excellent energy density per unit volume and excellent output characteristics and high-temperature life characteristics by using the above positive electrode active material.

## MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

In the present invention, a "grain" is a particle unit having the same crystal orientation, wherein it is a smallest particle unit recognized as one body in an electron backscatter diffraction (EBSD) map image. A size of the grain may be measured by image analysis of an EBSD map.

In the present invention, a "single particle" is a particle composed of one nodule. In the present invention, a "pseudo-single particle" means a composite particle formed of 10 or less nodules.

In the present invention, the "nodule" means a particle unit body constituting the single particle and the pseudo-single particle, wherein the nodule may be a single crystal without a crystalline grain boundary, or may be a polycrystal in which grain boundaries do not exist in appearance when observed by using a scanning electron microscope (SEM) with a field of view of 5,000 times to 20,000 times.

A "secondary particle" in the present invention means a particle formed by aggregation of a plurality, for example, tens to hundreds of primary particles. Specifically, the secondary particle is an aggregate of 50 or more primary particles.

The expression "particle" used in the present invention may include any one or all of a single particle, a pseudo-single particle, a primary particle, a nodule, and a secondary particle.

In the present invention, "$D_n$" means a particle diameter at n% of cumulative distribution of volume according to the particle diameter. That is, $D_{50}$ is a particle diameter at 50% of the cumulative distribution of volume according to the particle diameter, $D_{90}$ is a particle diameter at 90% of the cumulative distribution of volume according to the particle diameter, and $D_{10}$ is a particle diameter at 10% of the cumulative distribution of volume according to the particle diameter. The $D_n$ may be measured by using a laser diffraction method. Specifically, after dispersing measurement target powder in a dispersion medium, the dispersion medium is introduced into a commercial laser diffraction particle size measurement instrument (e.g., Microtrac S3500) and a particle size distribution is calculated by measuring a difference in diffraction patterns due to a particle size when particles pass through a laser beam. The $D_{10}$, $D_{50}$, and $D_{90}$ may be measured by calculating particle diameters at 10%, 50%, and 90% of the cumulative distribution of volume according to the particle diameter using the measurement instrument.

In the present invention, an "average particle diameter ($D_n$) of the nodule" may be measured by a method of calculating an arithmetic mean value of particle diameters after measuring the particle diameters of each of the nodules distinguished in a cross-sectional scanning electron microscope (SEM) image of a positive electrode active material.

In the present invention, after XRD data are obtained using an X-ray diffractometer (Bruker, D8 Endeavor) and atomic structure analysis is performed using a Rietveld method to respectively analyze a relative amount of $Ni^{2+}$ ions occupying lithium sites and relative occupancy by oxygen at oxygen sites, the "nickel disorder" may mean an amount (%) of $Ni^{2+}$ ions disordered on the lithium sites which is obtained therefrom.

"Strain" in the present invention means lattice distortion caused by defects, i.e., a microscopic deformation. The strain was measured by analyzing XRD data obtained by X-ray diffraction analysis of positive electrode active material powder using a Rietveld refinement method. In this case, after putting a sample in a groove of a holder for general powder, leveling a surface of the sample using a slide glass, and filling the sample such that a sample height matches an edge of the holder, the X-ray diffraction analysis may be performed using a fixed divergence slit (FDS) of 0.5° and a 2θ range of 15° to 90° under conditions, in which a step size is 0.02° and total scan time is about 20 minutes, using a Bruker D8 Endeavor (light source: Cu-Kα, λ=1.54 Å) equipped with a LynxEye XE-T position sensitive detector. Rietveld refinement may be performed on the measured data in consideration of charge at each site (metals at transition metal sites are +3, Ni at a Li site is +2) and nickel disorder. Specifically, instrumental broadening during the strain analysis may use Fundamental Parameter Approach (FPA) implemented in a Bruker TOPAS program, and entire peaks in the measurement range may be used during fitting. A peak shape may be fitted using only Lorentzian contribution as a first principle (FP) among peak types available in the TOPAS.

A "specific surface area" in the present invention is measured by a Brunauer-Emmett-Teller (BET) method, wherein, specifically, the specific surface area may be calculated from a nitrogen gas adsorption amount at a liquid nitrogen temperature (77K) using BELSORP-mini II by Bell Japan Inc.

Hereinafter, the present invention will be described in detail.

A positive electrode active material precursor according to the present invention, a method of preparing the same, a positive electrode active material, a positive electrode and/or a lithium secondary battery include at least one of configurations disclosed below, and may include any combination between technically possible configurations among the configurations below.

**Positive Electrode Active Material Precursor**

A positive electrode active material precursor of the present invention may include nickel among total metals in an amount of 50 mol% or more, 52 mol% or more, 55 mol% or more, 57 mol% or more, 60 mol% or more, 99 mol% or less, 90 mol% or less, 85 mol% or less, 80 mol% or less, 75 mol% or less, 72 mol% or less, 70 mol% or less, 67 mol% or less, 65 mol% or less, 62 mol% or less, or 60 mol% or less. For example, the positive electrode active material precursor of the present invention may include nickel among the total metals in an amount of 50 mol% or more, 50 mol% to 80 mol%, 50 mol% to 70 mol%, 55 mol% to 65 mol%, or 57 mol% to 62 mol%. In a case in which the above range is satisfied, a positive electrode active material with high energy density may be prepared. Particularly, in a case in which the positive electrode active material precursor includes nickel among the total metals in an amount of 50 mol% to 80 mol%, a positive electrode active material having excellent capacity characteristics and structural stability may be prepared.

The positive electrode active material precursor of the present invention may include cobalt among the total metals in an amount of 1 mol% or more, 3 mol% or more, 5 mol% or more, 7 mol% or more, 10 mol% or more, 20 mol% or less, 17 mol% or less, 15 mol% or less, 13 mol% or less, or 10 mol% or less. For example, the positive electrode active material precursor of the present invention may include cobalt among the total metals in an amount of 20 mol% or less, 1 mol% to 17 mol%, 5 mol% to 15 mol%, or 7 mol% to 13 mol%. In a case in which the above range is satisfied, a certain level or more of output characteristics may be secured while having a cost advantage by including relatively less cobalt.

The positive electrode active material precursor of the present invention may include manganese among the total metals in an amount of 1 mol% or more, 5 mol% or more, 10 mol% or more, 15 mol% or more, 20 mol% or more, 25 mol% or more, 30 mol% or more, 40 mol% or less, 38 mol% or less, 37 mol% or less, 35 mol% or less, 33 mol% or less, 32 mol% or less, or 30 mol% or less. For example, the positive electrode active material precursor of the present invention may include manganese among the total metals in an amount of 40 mol% or less, 1 mol% to 38 mol%, 10 mol% to 37 mol%, 20 mol% to 33 mol%, or 25 mol% to 32 mol%. In a case in which the above range is satisfied, the structural stability of the prepared positive electrode active material may be excellent.

The positive electrode active material precursor of the present invention may include a nickel-based hydroxide containing nickel, cobalt, and manganese.

The positive electrode active material precursor of the present invention may have a composition represented by Formula 1 or Formula 2.

$$[Formula\ 1] \qquad [Ni_pCo_qMn_r](OH)_2$$

$$[Formula\ 2] \qquad [Ni_pCo_qMn_r]O \cdot OH$$

In Formulae 1 and 2, p refers to a molar ratio of nickel among metallic elements in the precursor, wherein p may satisfy $0.5 \leq p < 1.0$, $0.5 \leq p \leq 0.8$, $0.5 \leq p \leq 0.7$, $0.55 \leq p \leq 0.65$, or $0.57 \leq p \leq 0.62$.

In Formulae 1 and 2, q refers to a molar ratio of cobalt among the metallic elements in the precursor, wherein q may satisfy $0 < q \leq 0.2$, $0.01 \leq q \leq 0.17$, $0.05 \leq q \leq 0.15$, or $0.07 \leq q \leq 0.13$.

In Formulae 1 and 2, r refers to a molar ratio of manganese among the metallic elements in the precursor, wherein r may satisfy $0 < r \leq 0.4$, $0.01 \leq r < 0.38$, $0.05 \leq r \leq 0.37$, $0.1 \leq r \leq 0.35$, $0.2 \leq r \leq 0.33$, or $0.25 \leq r \leq 0.32$.

A Brunauer-Emmett-Teller (BET) specific surface area of the positive electrode active material precursor of the present invention may be greater than 16 $m^2/g$, 17 $m^2/g$ or more, 18 $m^2/g$ or more, 19 $m^2/g$ or more, 20.0 $m^2/g$ or more, or greater than 20.0 $m^2/g$. The BET specific surface area of the positive electrode active material precursor of the present invention may be 30 $m^2/g$ or less, 27 $m^2/g$ or less, 26 $m^2/g$ or less, 25 $m^2/g$ or less, 24 $m^2/g$ or less, or 23.5 $m^2/g$ or less. For example, the BET specific surface area of the positive electrode active material precursor of the present invention may be

greater than 16 m$^2$/g, 17 m$^2$/g to 30 m$^2$/g, 18 m$^2$/g to 27 m$^2$/g, 19 m$^2$/g to 25 m$^2$/g, or 20 m$^2$/g to 23.5 m$^2$/g. In a case in which a value of the BET specific surface area of the positive electrode active material precursor satisfies the above range, since surface reactivity with lithium increases due to the high specific surface area of the precursor, sintering occurs well and benefits in resistance and output occur through a decrease in sintering temperature.

The positive electrode active material precursor of the present invention may have a SPAN defined by Equation (C) of 0.7 or less.

$$\texttt{Equation (C): SPAN = } (D_{90}-D_{10})/D_{50}$$

In Equation (C), $D_{90}$ represents a particle diameter at 90% of cumulative distribution of volume according to the particle diameter of the positive electrode active material precursor which is measured by laser diffraction, $D_{50}$ represents a particle diameter at 50% of the cumulative distribution of volume according to the particle diameter of the positive electrode active material precursor which is measured by laser diffraction, and $D_{10}$ represents a particle diameter at 10% of the cumulative distribution of volume according to the particle diameter of the positive electrode active material precursor which is measured by laser diffraction.

Specifically, the positive electrode active material precursor of the present invention may have a SPAN defined by Equation (C) of 0.7 or less, 0.65 or less, 0.63 or less, 0.60 or less, 0.58 or less, 0.55 or less, 0.54 or less, 0.53 or less, 0.20 or more, 0.25 or more, 0.30 or more, 0.35 or more, 0.40 or more, 0.42 or more, 0.45 or more, or 0.48 or more. For example, the positive electrode active material precursor of the present invention may have a SPAN defined by Equation (C) of 0.7 or less, 0.20 to 0.60, 0.40 to 0.54, or 0.48 to 0.53. In a case in which a SPAN value of the positive electrode active material precursor is greater than 0.7, even if the BET specific surface area and a pore area ratio of the positive electrode active material satisfy ranges according to the present invention, the positive electrode active material may react non-uniformly with lithium during a sintering step, and accordingly, since a crystal structure of the positive electrode active material is formed such that I(003)/I(104) is inferior, a movement path of lithium ions is not sufficiently secured, and thus, resistance characteristics and life characteristics of the positive electrode active material may be degraded. Accordingly, in a case in which the SPAN value of the positive electrode active material precursor satisfies the above range, uniform sintering with lithium is possible due to a uniform particle size distribution of the precursor, and as a result, an effect of reducing defects and strain within the structure of the positive electrode active material occurs.

An average particle diameter $D_{50}$ of the positive electrode active material precursor of the present invention may be 1 μm or more, 1.5 μm or more, 2 μm or more, greater than 2 μm, 2.5 μm or more, 3 μm or more, 3.4 μm or more, 6 μm or less, 5.5 μm or less, 5 μm or less, 4.5 μm or less, 4 μm or less, or 3.5 μm or less. For example, the average particle diameter $D_{50}$ of the positive electrode active material precursor of the present invention may be in a range of 1 μm to 6 μm, 1 μm to 5 μm, greater than 2 μm and equal to or less than 5 μm, 2.5 μm to 4 μm, 3.0 μm to 4 μm, or 3.2 μm to 3.5 μm. In a case in which the average particle diameter of the positive electrode active material precursor of the present invention is smaller than the above range, since sintering may proceed non-uniformly to prepare a positive electrode active material having a poor degree of single crystal formation and a poor degree of single particle formation, particle breakage during rolling and charge and discharge is increased and an electrolyte side reaction may be increased to degrade life characteristics. Accordingly, in a case in which the average particle diameter of the positive electrode active material precursor of the present invention satisfies the above range, reaction uniformity may be improved, and the life characteristics may be excellent.

The $D_{90}$ of the positive electrode active material precursor of the present invention may be in a range of 2 μm to 7 μm, 2.5 μm to 6.5 μm, 3.5 μm to 5.5 μm, 4.0 μm to 5.0 μm, 4.0 μm to 4.25 μm, or 4.07 μm to 4.20 μm. In a case in which the above range is satisfied, the SPAN value of the positive electrode active material precursor of the present invention may be appropriately controlled, and particle size uniformity may be achieved.

The $D_{10}$ of the positive electrode active material precursor of the present invention may be in a range of 0.5 μm to 5 μm, 1 μm to 4 μm, 1.5 μm to 3.5 μm, 2.0 μm to 2.5 μm, or 2.3 μm to 2.45 μm. In a case in which the above range is satisfied, the SPAN value of the positive electrode active material precursor of the present invention may be appropriately controlled, and the particle size uniformity may be achieved.

A pore area ratio (PAR) of the positive electrode active material precursor of the present invention may be in a range of 10% to 30%. Specifically, the pore area ratio (PAR) of the positive electrode active material precursor of the present invention may be 10% or more, 11% or more, 12% or more, 13% or more, 14% or more, 15% or more, 16% or more, 17% or more, 18% or more, 19% or more, 20% or more, 21% or more, 22% or more, 23% or more, 24% or more, 30% or less, 29.5% or less, or 29% or less. For example, the pore area ratio (PAR) of the positive electrode active material precursor may be in a range of 10% to 30%, 15% to 30%, 17% to 30%, 19% to 29%, or 24% to 29%. In a case in which a value of the pore area ratio (PAR) of the positive electrode active material precursor satisfies the above range, since internal pores help crystal growth during high-temperature sintering to increase a degree of single crystal formation of the prepared positive electrode active material, life characteristics and capacity characteristics of a battery using the above positive electrode active material may be excellent.

The pore area ratio (PAR) in the present invention means a ratio of a pore area to an internal area of a positive electrode active material precursor particle, and specifically means an arithmetic mean value of the ratios of the pore areas to the internal areas of the positive electrode active material precursor particles. Specifically, the pore area ratio (PAR) may be measured by a pore distribution analysis method in which a cross-sectional image is obtained by taking a scanning electron microscope (SEM) image of the positive electrode active material precursor and the cross-sectional image is analyzed using an image analysis program. For example, after impregnating the positive electrode active material precursor in an epoxy resin or polydimethylsiloxane (PDMS) resin and curing the impregnated positive electrode active material precursor, particles of the positive electrode active material precursor are cut in a state in which cross sections may be observed by using a focused ion beam (FIB). Thereafter, a scanning electron microscope (SEM) is used to obtain SEM cross-sectional images of a plurality of the positive electrode active material precursor particles. Thereafter, for the obtained SEM cross-sectional images, a pore region of each positive electrode active material precursor particle is indicated as a shaded area, and a dense region of each positive electrode active material precursor particle is indicated as a white area using image analysis software WinRoof 6.1.1. For each of 20 or more arbitrary positive electrode active material precursor particles among the measured positive electrode active material precursor particles, a ratio (%) is calculated as [shaded area/(shaded area + white area) $\times$ 100], and the pore area ratio (PAR) may be obtained by calculating an arithmetic mean value thereof.

The positive electrode active material precursor may have a uniform value of the pore area ratio within the positive electrode active material precursor particle. The expression "the value of the pore area ratio is uniform within the positive electrode active material precursor particle" may mean that, when the positive electrode active material precursor particle is divided into a plurality of (for example, 3 or more, or 5 or more) regions, values of the pore area ratio measured in the regions satisfy $\pm 10\%$ of the pore area ratio value of the positive electrode active material precursor.

Specifically, in a case in which the positive electrode active material precursor is defined as a seed-core-shell structure including a seed portion; a core portion disposed on the seed portion; and a shell portion disposed on the core portion, a pore area ratio of the seed portion, a pore area ratio of the core portion, and a pore area ratio of the shell portion may be the same within an error range of $\pm 10\%$.

In this case, since single crystals are uniformly formed in the seed portion, the core portion, and the shell portion during sintering, the life characteristics may be improved.

The BET specific surface area, the pore area ratio, and the SPAN value of the positive electrode active material precursor of the present invention may be systematically adjusted within a desired range by appropriately controlling a flow rate of a transition metal-containing solution, a flow rate of a cationic complexing agent, a pH of a reaction solution, and reaction time in a positive electrode active material nucleus formation step (first step), and a flow rate of a transition metal-containing solution, a flow rate of a cationic complexing agent, a pH of a reaction solution, reaction time, and stirring speed in a positive electrode active material precursor particle growth step (second step) during preparation of the positive electrode active material precursor.

## Method of Preparing Positive Electrode Active Material Precursor

A method of preparing a positive electrode active material precursor of the present invention may include: (1) a first step of forming positive electrode active material precursor nuclei (seeds) by performing a co-precipitation reaction while supplying a transition metal-containing solution, an ammonium cationic complexing agent, and a basic solution to a reactor; and (2) a second step of growing positive electrode active material precursor particles by performing a co-precipitation reaction while supplying a transition metal-containing solution, an ammonium complexing agent, and a basic solution to a reaction solution in which the positive electrode active material precursor nuclei have been formed.

(1) First Step

First, positive electrode active material precursor nuclei (seeds) are formed by performing a co-precipitation reaction while supplying a transition metal-containing solution, an ammonium cationic complexing agent, and a basic solution to a reactor.

The reactor may contain a reaction mother liquor. Specifically, before supplying the transition metal-containing solution, the ammonium cationic complexing agent, and the basic solution as reaction raw materials, the ammonium cationic complexing agent, the basic solution, and water may first be added to the reactor to form a reaction mother liquor.

In this case, the ammonium cationic complexing agent may include an ammonium cationic complexing agent compound containing at least one selected from the group consisting of $NH_4OH$, $(NH_4)_2SO_4$, $NH_4NO_3$, $NH_4Cl$, $CH_3COONH_4$, and $NH_4CO_3$, and the above compound may be added to the reactor in a form of a solution in which it is dissolved in a solvent. In this case, water or a mixture of water and an organic solvent (specifically, alcohol, etc.), which may be uniformly mixed with the water, may be used as the solvent. Most preferably, $NH_4OH$, i.e., ammonia water may be used.

The ammonium cationic complexing agent may have a concentration in which the ammonium cationic complexing agent compound is included in an amount of 20 wt% or less, 1 wt% to 15 wt%, 5 wt% to 12 wt%, or 7 wt% to 11 wt%.

Next, the basic solution may include at least one basic compound selected from the group consisting of NaOH, KOH, and $Ca(OH)_2$, and the above compound may be added to the reactor in a form of a solution in which it is dissolved in a solvent. In this case, water or a mixture of water and an organic solvent (specifically, alcohol, etc.), which may be uniformly mixed with the water, may be used as the solvent.

The basic solution may have a concentration in which the basic compound is included in an amount of 10 wt% to 40 wt%, 15 wt% to 35 wt%, 20 wt% to 30 wt%, or 23 wt% to 27 wt%.

The reaction mother liquor may be formed such that a pH is in a range of 11 to 13, or 11 to 12. When the pH of the reaction mother liquor satisfies the above range, nucleus formation may occur smoothly.

After the ammonium cationic complexing agent, the basic solution, and the water are added to the reactor to form the reaction mother liquor, the reaction mother liquor may be purged with nitrogen gas to remove oxygen in the reaction mother liquor.

If a transition metal-containing solution, an ammonium cationic complexing agent, and a basic solution are supplied to the reactor containing the reaction mother liquor and stirred, positive electrode active material precursor nuclei may be formed as a co-precipitation reaction occurs. Specifically, if a transition metal-containing solution, an ammonium cationic complexing agent, and a basic aqueous solution are supplied to the reactor containing the reaction mother liquor and stirred, precursor nuclei in a form of primary particles are generated (nucleation) as a co-precipitation reaction occurs, and nuclei (seeds) in a form of secondary particles may be formed as the nuclei in the form of primary particles are aggregated.

The ammonium cationic complexing agent and the basic aqueous solution may be the same as those described above.

The ammonium cationic complexing agent in the first step may be supplied at a flow rate of 6 mL/hr to 11 mL/hr, or 6 mL/hr to 10 mL/hr. In a case in which the above range is satisfied, since a growth rate of the positive electrode active material precursor nucleus may be smoothly maintained, the pore area ratio and the BET specific surface area of the prepared positive electrode active material precursor may be appropriately controlled.

An amount of the basic solution added in the nucleation step may be in a range of 6 mol/L to 8 mol/L, or 6 mol/L to 7 mol/L.

The transition metal-containing solution may include nickel, cobalt and manganese elements, and may be formed by mixing a nickel raw material, a cobalt raw material, and a manganese raw material in water.

The nickel raw material may be $Ni(OH)_2$, NiO, NiOOH, $NiCO_3 \cdot 2Ni(OH)_2 \cdot 4H_2O$, $NiC_2O_2 \cdot 2H_2O$, $Ni(NO_3)_2 \cdot 6H_2O$, $NiSO_4$, $NiSO_4 \cdot 6H_2O$, a fatty acid nickel salt, or a nickel halide, and any one thereof or a mixture of two or more thereof may be used, but the nickel raw material is not limited thereto.

The cobalt raw material may be $Co(OH)_2$, CoOOH, $Co(OCOCH_3)_2 \cdot 4H_2O$, $Co(NO_3)_2 \cdot 6H_2O$, or $Co(SO_4)_2 \cdot 7H_2O$, and any one thereof or a mixture of two or more thereof may be used, but the cobalt raw material is not limited thereto.

The manganese raw material may be manganese oxides such as $Mn_2O_3$, $MnO_2$, and $Mn_3O_4$; manganese salts such as $MnCO_3$, $Mn(NO_3)_2$, $MnSO_4$, manganese acetate, manganese dicarboxylate, manganese citrate, and a fatty acid manganese salt; a manganese oxyhydroxide, or manganese chloride, and any one thereof or a mixture of two or more thereof may be used, but the manganese raw material is not limited thereto.

The transition metal-containing solution may include the nickel raw material such that an amount of nickel is 50 mol% or more, 52 mol% or more, 55 mol% or more, 57 mol% or more, 60 mol% or more, 99 mol% or less, 90 mol% or less, 85 mol% or less, 80 mol% or less, 75 mol% or less, 72 mol% or less, 70 mol% or less, 67 mol% or less, 65 mol% or less, 62 mol% or less, or 60 mol% or less based on the total metals. In a case in which the above range is satisfied, the capacity characteristics may be improved. In a case in which the amount of the nickel is 60 mol% or more based on the total metals, the transition metal-containing solution may further improve the capacity characteristics. An amount of transition metals included in the transition metal-containing solution supplied in the first step may be in a range of 1.0 mol/L to 3.0 mol/L, 1.5 mol/L to 2.5 mol/L, or 1.8 mol/L to 2.3 mol/L.

The transition metal-containing solution in the first step may be supplied at a flow rate of 100 mL/hr or more, 150 mL/hr or more, 200 mL/hr or more, 250 mL/hr or more, 300 mL/hr or more, 320 mL/hr or more, 350 mL/hr or more, 600 mL/hr or less, 550 mL/hr or less, 500 mL/hr or less, 450 mL/hr or less, or 400 mL/hr or less. In a case in which the above range is satisfied, a crystal structure of the positive electrode active material precursor nucleus may be stably formed, and since the growth rate is appropriate, the pore area ratio and the BET specific surface area of the positive electrode active material precursor may be appropriately controlled.

The first step may be performed for 20 hours or less, 2 hours to 15 hours, 2 hours to 12 hours, or 5 hours to 11 hours. In a case in which the duration of the first step satisfies the above range, since the positive electrode active material precursor nuclei are sufficiently formed, productivity is excellent and a particle size distribution of the prepared positive electrode active material precursor may be uniform.

Also, a pH of a reaction solution in the first step may be in a range of 11 to 13, 11.5 to 12.5, or 11.9 to 12.2. In a case in which the above range is satisfied, since the nuclei may be grown while appropriately controlling density of the positive electrode active material precursor nuclei, the particle size distribution of the positive electrode active material precursor is uniform and the BET specific surface area and the pore area ratio may be controlled.

A temperature of the reaction solution in the first step may be in a range of 40°C to 80°C, 45°C to 80°C, 55°C to 78°C, or 65°C to 75°C. In a case in which the temperature of the reaction solution satisfies the above range, the nuclei of the positive electrode active material precursor are formed in the reaction solution, and a process of forming seeds by aggregation of the nuclei may be smoothly performed. The pH of the reaction solution may be controlled by adjusting the amount of the basic solution added using a pH sensor or the like.

(2) Second Step

Next, when the positive electrode active material precursor nuclei are sufficiently formed through the above-described process, positive electrode active material precursor particles may be grown by performing a co-precipitation reaction while supplying a transition metal-containing solution, an ammonium cationic complexing agent, and a basic solution to the reaction solution in which the positive electrode active material precursor nuclei have been formed. Specifically, positive electrode active material precursor particles may be grown by performing a co-precipitation reaction while supplying a transition metal-containing solution, an ammonium cationic complexing agent, and a basic solution to the reaction solution in which the positive electrode active material precursor nuclei have been formed and stirring the solution.

The transition metal-containing solution, the ammonium cationic complexing agent, and the basic solution added in the second step may be the same as those used in the nucleus formation step.

A pH of the reaction solution in the second step may be in a range of 11.4 or more, 11.4 to 12.0, 11.4 to 11.8, or 11.4 to 11.6. In a case in which the above range is satisfied, since the positive electrode active material precursor particles may be grown at an appropriate rate, the BET specific surface area may be appropriately controlled and the particle size distribution may be uniform.

A temperature of the reaction solution in the particle growth step may be in a range of 40°C to 80°C, 45°C to 80°C, or 45°C to 75°C. In a case in which the temperature of the reaction solution satisfies the above range, particle growth may occur smoothly. The pH of the reaction solution may be controlled by adjusting the amount of the basic solution added using a pH sensor or the like.

The second step may be performed for 10 hours or more, 15 hours or more, 20 hours or more, 23 hours or more, 25 hours or more, 26 hours or more, 28 hours or more, 30 hours or more, 33 hours or more, 35 hours or more, 100 hours or less, 80 hours or less, 60 hours or less, 50 hours or less, 48 hours or less, 45 hours or less, 43 hours or less, or 41 hours or less. For example, the second step may be performed for 10 hours to 100 hours, 28 hours to 50 hours, 33 hours to 45 hours, or 35 hours to 41 hours. In a case in which the above range is satisfied, since the positive electrode active material precursor particles grow smoothly, the BET specific surface area, the pore area ratio, and the particle size distribution of the positive electrode active material precursor may be appropriately controlled.

The stirring may be performed at a speed of 260 rpm to 400 rpm, 280 rpm to 380 rpm, or 300 rpm to 340 rpm. In a case in which the above range is satisfied, since the prepared positive electrode active material precursor may be formed uniformly, the particle size distribution may be excellent.

When the reactor becomes full in the second stage, the supply of the raw materials is stopped and the stirring is stopped to allow the precursor particles in the reaction solution to settle, and, after removing a supernatant, the supply of the raw materials may be resumed to continue the reaction. Sufficient reaction time required for the growth of the positive electrode active material precursor particles may be secured by performing a process of removing the supernatant from the reactor as described above, and a precursor production amount may be increased. The above process may be repeated two or more times.

When the positive electrode active material precursor particles are sufficiently grown through the above process, the precursor particles may be separated from the reaction solution, washed, and then dried to obtain positive electrode active material precursor particles.

**Positive Electrode Active Material**

The positive electrode active material precursor according to the present invention prepared as described above may be mixed with a lithium raw material and then sintered to prepare a positive electrode active material.

The lithium raw material may be used without particular limitation as long as it is a compound containing a lithium source, and specifically, at least one selected from the group consisting of lithium carbonate ($Li_2CO_3$), lithium hydroxide ($LiOH \cdot H_2O$), $LiNO_3$, $CH_3COOLi$, and $Li_2(COO)_2$ may be used.

The positive electrode active material precursor and the lithium raw material may be mixed such that a molar ratio of lithium (Li):transition metals (Me) included in the positive electrode active material precursor is in a range of 1:1 to 1.2:1, 1:1 to 1.1:1, or 1:1 to 1.05:1. In a case in which the molar ratio of the positive electrode active material precursor to the lithium raw material satisfies the above range, capacity of the positive electrode active material prepared may be excellent, and since the sintering may proceed smoothly, a crystal structure of the positive electrode active material may be stably formed.

Also, if necessary, a doping element $M^1$-containing material may be additionally mixed during the sintering. The doping element $M^1$, for example, may be at least one selected from the group consisting of aluminum (Al), barium (Ba), calcium (Ca), zirconium (Zr), titanium (Ti), magnesium (Mg), tantalum (Ta), niobium (Nb), and molybdenum (Mo), or may be Al. The doping element $M^1$-containing raw material may be at least one selected from the group consisting of acetic acid salts, sulfates, sulfides, hydroxides, oxides, or oxyhydroxides containing the doping element $M^1$, but is not limited thereto.

The sintering may be performed at 600°C to 950°C, 650°C to 900°C, 680°C to 850°C, 700°C to 800°C, or 720°C to 760°C. The positive electrode active material of the present invention may reduce defects and strain within the positive electrode active material structure by being sintered in the above temperature range. Particularly, since the positive electrode active material of the present invention is prepared by using the positive electrode active material precursor in which the BET specific surface area, the SPAN, and the pore area ratio are controlled within specific ranges, a positive electrode active material including at least one of a single particle and a pseudo-single particle may be smoothly formed even if the positive electrode active material is sintered at a temperature slightly lower than a sintering temperature during preparation of a conventional positive electrode active material including at least one of a single particle and a pseudo-single particle. Accordingly, it has an advantage of being able to significantly reduce the defects and strain within the positive electrode active material structure due to the high sintering temperature, and resistance and output characteristics of the positive electrode active material may be improved.

The sintering may be performed for 5 hours to 35 hours, 5 hours to 25 hours, 7 hours to 20 hours, or 8 hours to 12 hours.

The positive electrode active material of the present invention may be a positive electrode active material including at least one of a single particle composed of one nodule or a pseudo-single particle that is a composite of 30 or less nodules. Accordingly, the positive electrode active material of the present invention has less particle breakage or cracking due to rolling during preparation of an electrode, and thus, since gas generation and degradation of the positive electrode active material due to a side reaction with an electrolyte solution are less, excellent high-temperature life characteristics may be achieved.

The positive electrode active material of the present invention may include the single particle or the pseudo-single particle in an amount of 90 wt% to 100 wt%, 92 wt% to 100 wt%, 94 wt% to 100 wt%, or 100 wt% based on a total weight of the positive electrode active material. In this case, sufficient life characteristics may be obtained because the side reaction with the electrolyte solution due to fine powder generated from the secondary particles during the preparation of the electrode and charge and discharge may be suppressed.

The positive electrode active material of the present invention may include nickel among total metals excluding lithium in an amount of 50 mol% or more, 52 mol% or more, 55 mol% or more, 57 mol% or more, 60 mol% or more, 99 mol% or less, 90 mol% or less, 85 mol% or less, 80 mol% or less, 75 mol% or less, 72 mol% or less, 70 mol% or less, 67 mol% or less, 65 mol% or less, 62 mol% or less, or 60 mol% or less. For example, the positive electrode active material of the present invention may include the nickel among the total metals excluding lithium in an amount of 50 mol% or more, 50 mol% to 80 mol%, 50 mol% to 70 mol%, 55 mol% to 65 mol%, or 57 mol% to 62 mol%. In a case in which the above range is satisfied, excellent capacity may be achieved. Particularly, in a case in which the positive electrode active material includes the nickel among the total metals excluding lithium in an amount of 50 mol% to 80 mol%, it has an advantage of having excellent capacity characteristics as well as excellent structural stability.

The positive electrode active material of the present invention may include cobalt among the total metals excluding lithium in an amount of 1 mol% or more, 3 mol% or more, 5 mol% or more, 7 mol% or more, 10 mol% or more, 20 mol% or less, 17 mol% or less, 15 mol% or less, 13 mol% or less, or 10 mol% or less. For example, the positive electrode active material of the present invention may include the cobalt among the total metals excluding lithium in an amount of 20 mol% or less, 1 mol% to 17 mol%, 5 mol% to 15 mol%, or 7 mol% to 13 mol%. In a case in which the above range is satisfied, since the positive electrode active material includes a relatively small amount of the cobalt, it may secure output characteristics at a certain level or higher while having a cost advantage.

The positive electrode active material of the present invention may include manganese among the total metals excluding lithium in an amount of 1 mol% or more, 5 mol% or more, 10 mol% or more, 15 mol% or more, 20 mol% or more, 25 mol% or more, 30 mol% or more, 40 mol% or less, 38 mol% or less, 37 mol% or less, 35 mol% or less, 33 mol% or less, 32 mol% or less, or 30 mol% or less. For example, the positive electrode active material of the present invention may include the manganese among the total metals excluding lithium in an amount of 40 mol% or less, 1 mol% to 38 mol%, 10 mol% to 37 mol%, 20 mol% to 33 mol%, or 25 mol% to 32 mol%. In a case in which the above range is satisfied, the structural stability of the positive electrode active material may be excellent.

The positive electrode active material of the present invention may include a doping element. The doping element may be at least one selected from the group consisting of Al, Ba, Ca, Zr, Ti, Mg, Ta, Nb, and Mo, or may be Al.

The positive electrode active material of the present invention may include the doping element among the total metals excluding lithium in an amount of 0.1 mol% or more, 0.5 mol% or more, 1 mol% or more, 1.5 mol% or more, 10 mol% or less, 8 mol% or less, 5 mol% or less, 3 mol% or less, or 2 mol% or less. In a case in which the above range is satisfied, reactivity during sintering may be improved, and the structural stability and output characteristics may be improved while maintaining energy density of the positive electrode active material.

The positive electrode active material of the present invention may include a lithium nickel-based oxide containing nickel, cobalt, and manganese. Specifically, the positive electrode active material of the present invention may include a lithium nickel-based oxide containing nickel, cobalt, manganese, and the doping element.

The positive electrode active material of the present invention may have a composition represented by Formula 4 below.

[Formula 4] $Li_aNi_bCo_cMn_dM^1_eO_2$

In Formula 4, $M^1$ may be at least one selected from the group consisting of Al, Ba, Ca, Zr, Ti, Mg, Ta, Nb, W, Y, and Mo.

a represents a molar ratio of lithium in the positive electrode active material particle, wherein a may satisfy $0.80 \leq a \leq 1.5$, $0.9 \leq a \leq 1.2$, $0.95 \leq a \leq 1.08$, or $1 \leq a \leq 1.08$.

b represents a molar ratio of nickel among metallic elements excluding lithium in the positive electrode active material particle, wherein b may satisfy $0.5 \leq b < 1.0$, $0.5 \leq b \leq 0.8$, $0.5 \leq b \leq 0.7$, $0.55 \leq b \leq 0.65$, or $0.57 \leq b \leq 0.62$. In a case in which a nickel content satisfies the above range, high-capacity characteristics and structural stability may be achieved.

c represents a molar ratio of cobalt among the metallic elements excluding lithium in the positive electrode active material particle, wherein c may satisfy $0 < c \leq 0.2$, $0.01 \leq c \leq 0.17$, $0.05 \leq c \leq 0.15$, or $0.07 \leq c \leq 0.13$.

d represents a molar ratio of Mn among the metallic elements excluding lithium in the positive electrode active material particle, wherein d may satisfy $0 < d \leq 0.4$, $0.01 \leq d \leq 0.38$, $0.05 \leq d \leq 0.37$, $0.1 \leq d \leq 0.35$, $0.2 \leq d \leq 0.33$, or $0.25 \leq d \leq 0.32$.

e represents a molar ratio of $M^1$ among the metallic elements excluding lithium in the positive electrode active material particle, wherein e may satisfy $0 \leq e \leq 0.10$ or $0 \leq e \leq 0.05$.

The positive electrode active material of the present invention may have a degree of single crystal formation defined by Equation (A) below of 2.7 or more. The degree of single crystal formation may function as a parameter indicating a degree of grain growth in the positive electrode active material.

$$\text{Equation (A): Degree of single crystal formation} = \frac{\sum_{i=1}^{n} \frac{4\pi}{3} \times R_i^3}{n}$$

In Equation (A), $R_i$ is a radius of an $i^{th}$ grain which is measured when an electrode prepared by using the positive electrode active material is subjected to an ion-milling treatment and a cross-section of the electrode is then analyzed by electron backscatter diffraction (EBSD), wherein $R_i$ is a value measured in $\mu m$ units, but a value substituted into Equation (A) is a unitless number that does not include units, and n is the total number of grains measured by the electron backscatter diffraction (EBSD) analysis. n may be in a range of 200 to 500.

Specifically, the positive electrode active material of the present invention may have a degree of single crystal formation of 2.7 or more, 2.8 or more, 2.9 or more, 3.0 or more, 3.1 or more, 3.2 or more, 5.0 or less, 4.5 or less, 4.0 or less, 3.8 or less, 3.7 or less, or 3.6 or less. For example, the positive electrode active material of the present invention may have a degree of single crystal formation of 2.7 or more, 2.8 or more, 3.2 or more, 3.2 to 5.0, 3.2 to 4.5, 3.2 to 4.0, or 3.2 to 3.6. In a case in which a value of the degree of single crystal formation of the positive electrode active material satisfies the above range, since grains in the positive electrode active material grow sufficiently, particle strength is better than that of a conventional oxide in the form of a secondary particle, and thus, the particle breakage during rolling may be reduced and the structural stability may be excellent. Accordingly, energy density per unit volume may be excellent, and high-temperature performance may be excellent.

The positive electrode active material of the present invention may have a degree of single particle formation defined by Equation (B) below of 0.65 or more. The degree of single particle formation is a value obtained by dividing the degree of single crystal formation by an average particle diameter $D_{50}$ of the positive electrode active material, wherein it indicates a degree of grain growth relative to the average particle diameter of the positive electrode active material. A smaller degree of single particle formation means that the positive electrode active material particle is composed of a relatively larger number of grains, and a larger degree of single particle formation means that the positive electrode active material particle is composed of a relatively smaller number of grains.

Equation (B): Degree of single particle formation =

$$\frac{\sum_{i=1}^{n} \frac{4\pi}{3} \times R_i^3}{n} \times \frac{1}{D_{50}}$$

In Equation (B), $R_i$ is a radius of an $i^{th}$ grain which is measured when an electrode prepared by using the positive electrode active material is subjected to an ion-milling treatment and a cross-section of the electrode is then analyzed by electron backscatter diffraction (EBSD), wherein $R_i$ is a value measured in $\mu$m units, but a value substituted into Equation (B) is a unitless number that does not include units, and n is the total number of grains measured by the electron backscatter diffraction (EBSD) analysis, wherein n is in a range of 200 to 500. Also, in Equation (B), $D_{50}$ is the $D_{50}$ of the positive electrode active material, and is a value measured in $\mu$m units, but a value substituted into Equation (B) is a unitless number that does not include units.

Specifically, the positive electrode active material of the present invention may have a degree of single particle formation defined by Equation (B) of 0.65 or more, 0.67 or more, 0.7 or more, 0.72 or more, 0.75 or more, 0.77 or more, 0.79 or more, 0.8 or more, 0.82 or more, 1.1 or less, 1.05 or less, 1 or less, 0.98 or less, 0.95 or less, or 0.92 or less. For example, the positive electrode active material of the present invention may have a degree of single particle formation of 0.65 or more, 0.75 or more, 0.8 or more, or 0.82 to 0.92. In a case in which the degree of single particle formation of the positive electrode active material satisfies the above range, the particle strength may be excellent due to relatively few grain boundaries, and the electrolyte side reaction and structural collapse of the positive electrode active material may be reduced due to a small specific surface area. Accordingly, the energy density per unit volume is excellent due to less particle breakage during rolling of a positive electrode including the positive electrode active material, and there is an effect of excellent high-voltage and high-temperature performance.

The average particle diameter $D_{50}$ of the positive electrode active material of the present invention may be 1 $\mu$m or more, 1.5 $\mu$m or more, 2 $\mu$m or more, greater than 2 $\mu$m, 2.5 $\mu$m or more, 3 $\mu$m or more, 3.4 $\mu$m or more, 3.6 $\mu$m or more, 3.7 $\mu$m or more, 3.8 $\mu$m or more, 3.85 $\mu$m or more, 6 $\mu$m or less, 5.5 $\mu$m or less, 5 $\mu$m or less, 4.5 $\mu$m or less, 4.1 $\mu$m or less, 4 $\mu$m or less, 3.95 $\mu$m or less, or 3.92 $\mu$m or less. For example, the average particle diameter $D_{50}$ of the positive electrode active material of the present invention may be in a range of 1 $\mu$m to 6 $\mu$m, 1 $\mu$m to 5 $\mu$m, greater than 2 $\mu$m and equal to or less than 5 $\mu$m, 3 $\mu$m to 4.5 $\mu$m, 3.7 $\mu$m to 4.1 $\mu$m, or 3.8 $\mu$m to 3.92 $\mu$m. In a case in which the average particle diameter of the positive electrode active material of the present invention satisfies the above range, since lithium-ion diffusivity and electrical conductivity of the positive electrode active material are improved, the output characteristics may be excellent and the structural stability may be excellent.

An average particle diameter ($D_n$) of the nodules in the positive electrode active material of the present invention may be in a range of 1 $\mu$m to 6 $\mu$m, 1 $\mu$m to 5 $\mu$m, 1 to 4 $\mu$m, 1.5 to 3.0 $\mu$m, or 1.7 to 2.4 $\mu$m. In a case in which the above range is satisfied, the particle strength and high-temperature life characteristics of the positive electrode active material may be excellent.

I(003)/I(104) of the positive electrode active material of the present invention may be 1.24 or more, 1.25 or more, 1.26 or more, 1.27 or more, 1.8 or less, 1.7 or less, 1.6 or less, 1.5 or less, 1.4 or less, 1.35 or less, or 1.31 or less. For example, the I(003)/I(104) of the positive electrode active material of the present invention may be 1.24 or more, 1.25 or more, 1.27 or more, 1.27 to 1.8, 1.27 to 1.5, or 1.27 to 1.31. The I(003)/I(104) means a ratio of peak intensity I(003) of a (003) plane to peak intensity I(104) of a (104) plane which is obtained by analyzing the positive electrode active material by "X-ray diffraction (XRD) analysis". A value of the I(003)/I(104) of the positive electrode active material may represent crystal characteristics of a layered structure, and in a case in which the above range is satisfied, since the layered structure of the positive electrode active material is well formed, there is little cation mixing between lithium ions and nickel ions, and thus, electrochemical properties of the positive electrode active material are excellent.

The positive electrode active material of the present invention may have a nickel disorder (Ni-disorder) of greater than 0% and less than 5%, 1% to 4%, or 1% to 3%. In a case in which the above range is satisfied, since the structural stability of the positive electrode active material is secured, resistance may be reduced and lifetime degradation may be mitigated.

**Positive Electrode**

A positive electrode according to the present invention includes the above-described positive electrode active material of the present invention. Specifically, the positive electrode includes a positive electrode collector and a positive electrode active material layer disposed on the positive electrode collector, and the positive electrode active material layer may include a conductive agent and a binder in addition to the positive electrode active material according to the present invention. Since the positive electrode active material has been described above, a detailed description thereof will be omitted and only the remaining components will be described in detail below.

The positive electrode collector of the present invention may include a metal having high conductivity, and is not particularly limited as long as it has no reactivity in a voltage range of the battery and the positive electrode active material layer is easily adhered thereto. As the positive electrode collector, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 $\mu$m to 500 $\mu$m, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a nonwoven fabric body, and the like.

The positive electrode active material layer of the present invention may optionally include a conductive agent and a binder in addition to the positive electrode active material, if necessary.

In this case, the positive electrode active material may be included in an amount of 80 wt% to 99 wt%, 85 wt% to 98.5 wt%, or 90 wt% to 98 wt% based on a total weight of the positive electrode active material layer, and when the positive electrode active material is included within the above amount range, it may exhibit excellent capacity characteristics.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon-based materials such as carbon black, acetylene black, Ketjen black, channel black, furnace black, lamp black, thermal black, and carbon fibers; powder or fibers of metal such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.1 wt% to 15 wt%, 1 wt% to 10 wt%, or 1.5 wt% to 4 wt% based on the total weight of the positive electrode active material layer.

The binder improves the adhesion between positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, poly acrylic acid, and a polymer having hydrogen thereof substituted with lithium (Li), sodium (Na), or calcium (Ca), or various copolymers thereof, and any one thereof or a mixture of two or more thereof may be used. The binder may be included in an amount of 0.1 wt% to 15 wt%, 1 wt% to 10 wt%, or 1.5 wt% to 4 wt% based on the total weight of the positive electrode active material layer.

The positive electrode may be prepared according to a typical method of preparing a positive electrode. Specifically, a composition for forming a positive electrode active material layer may be prepared by dissolving or dispersing the positive electrode active material as well as optionally the binder, the conductive agent, and a dispersant in a solvent. The composition for forming a positive electrode active material layer is applied, dried, and then rolled to prepare the positive electrode.

The solvent may be a solvent normally used in the art. The solvent may include dimethyl sulfoxide (DMSO), isopropyl alcohol, N-methylpyrrolidone (NMP), dimethyl formamide (DMF), acetone, or water, and any one thereof or a mixture of two or more thereof may be used. An amount of the solvent used may be sufficient if the solvent may dissolve or disperse the positive electrode active material, the conductive agent, the binder, and the dispersant in consideration of a coating thickness of the slurry and manufacturing yield, and may allow to have viscosity that may provide excellent thickness uniformity during the subsequent coating for the preparation of the positive electrode.

Also, as another method, the positive electrode may be prepared by casting the composition for forming a positive electrode active material layer on a separate support and then laminating a film separated from the support on the positive electrode collector.

## Electrochemical Device

Next, an electrochemical device according to the present invention will be described. The electrochemical device according to the present invention includes the above-described positive electrode of the present invention, wherein the electrochemical device may specifically be a battery or a capacitor, and, for example, may be a lithium secondary battery.

The lithium secondary battery specifically includes a positive electrode, a negative electrode disposed to face the positive electrode, a separator disposed between the positive electrode and the negative electrode, and an electrolyte, wherein, since the positive electrode is the same as described above, a detailed description thereof will be omitted, and only the remaining components will be described in detail below.

Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 $\mu$m to 500 $\mu$m, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a nonwoven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as $SiO_\beta(0<\beta<2)$, $SnO_2$, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt% based on a total weight of the negative electrode active material layer.

The binder is a component that assists in the binding between the conductive agent, the active material, and the current collector, wherein the binder is typically added in an amount of 0.1 wt% to 10 wt% based on the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a fluoro rubber, and various copolymers thereof.

The conductive agent is a component for further improving conductivity of the negative electrode active material, wherein the conductive agent may be added in an amount of 10 wt% or less, preferably, 5 wt% or less based on the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; fluorocarbon; metal powder such as aluminum powder, and nickel powder; conductive whiskers such as zinc oxide whiskers and potassium titanate whiskers; conductive metal oxide such as titanium oxide; or polyphenylene derivatives may be used.

The negative electrode active material layer may be prepared by coating a composition for forming a negative electrode active material layer, which is prepared by dissolving or dispersing optionally the binder and the conductive agent as well as the negative electrode active material in a solvent, on the negative electrode collector and drying the coated negative electrode collector, or may be prepared by casting the composition for forming a negative electrode active material layer on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond, an aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, an anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and $LiPF_6$, $LiClO_4$, $LiAsF_6$, $LiBF_4$, $LiSbF_6$, $LiAl_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$ may be used as the lithium salt. The lithium salt may be used in a concentration range of 0.1 M to 2.0 M. If the concentration of the lithium salt is included within the above range, since the electrolyte may have appropriate conductivity and viscosity, excellent performance of the electrolyte may be obtained and lithium ions may effectively move.

In order to improve lifetime characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexamethylphosphate triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components. In this case, the additive may be included in an amount of 0.1 wt% to 5 wt% based on a total weight of the electrolyte.

As described above, since the electrochemical device including the positive electrode according to the present invention stably exhibits excellent discharge capacity, output characteristics, and life characteristics, the electrochemical device is suitable for portable devices, such as mobile phones, notebook computers, and digital cameras, and electric cars such as hybrid electric vehicles (HEVs).

Thus, according to another embodiment of the present invention, a battery module including the electrochemical device as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the electrochemical device of the present invention is not particularly limited, but a cylindrical type using a can, a prismatic type, a pouch type, or a coin type may be used.

The electrochemical device according to the present invention may not only be used in a battery cell that is used as a power source of a small device, but may also be used as a unit cell in a medium and large sized battery module including a plurality of battery cells.

Examples of the medium and large sized device may be an electric vehicle, a hybrid electric vehicle, a plug-in hybrid electric vehicle, and a power storage system, but the medium and large sized device is not limited thereto.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

**Examples**

**Example 1**

(First step) NiSO$_4$, CoSO$_4$, and MnSO$_4$ were dissolved in ion exchange water in amounts such that a molar ratio of nickel:cobalt:manganese was 6:1:3 to prepare a transition metal-containing solution with a concentration of 2.0 M. After 4 L of deionized water was added to a 10 L batch reactor, dissolved oxygen in the water was removed by purging the reactor with N$_2$ gas at a rate of 2 L/min to create a non-oxidizing atmosphere. Thereafter, 390 ml of 9 wt% ammonia water and 8.6 ml of a 25 wt% sodium hydroxide aqueous solution were filled, and temperature of the reactor was increased while stirring at 300 rpm.

When a temperature of the solution inside the reactor reached 70°C, positive electrode active material precursor nuclei were formed while quantitatively injecting the transition metal-containing solution at a flow rate of 400 ml/hr and the 9 wt% ammonia water at a flow rate of 10 ml/hr for 5 hours. In this case, a pH of a reaction solution was maintained at 11.9 by injecting a sodium hydroxide aqueous solution using a pH-controlled pump.

(Second step) After 5 hours, when the positive electrode active material precursor nuclei were formed, the solution was stirred at a speed of 340 rpm while the transition metal-containing solution was supplied at a flow rate of 700 ml/hr and the 9 wt% ammonia water was supplied at a flow rate of 10 ml/hr, and a co-precipitation reaction was performed while a sodium hydroxide aqueous solution was injected using a pH-controlled pump to maintain the pH of the reaction solution at 11.6.

When a volume of the reaction solution reached 10 L, the solvent after completion of the reaction was discharged outside the reactor through a filtration device located inside the reactor, and the reaction was terminated when an average particle diameter D$_{50}$ of precursor particles reached 3.5 μm. Total reaction time was 41 hours.

After the positive electrode active material precursor particles were completely grown, the positive electrode active material precursor particles were separated from the reaction solution, washed to remove impurities, dried in a 140°C drying oven for 12 hours, and then sieved to prepare a positive electrode active material precursor.

**Example 2**

A positive electrode active material precursor was prepared in the same manner as in Example 1 except that in the (first step), quantitative injection was performed for 11 hours by reducing the flow rate of the transition metal-containing solution to 350 ml/hr and the flow rate of the 9 wt% ammonia water to 6 ml/hr, and in the (second step), the stirring speed was reduced to 300 rpm, the pH of the reaction solution was maintained at 11.4, and the total reaction time was 35 hours.

**Example 3**

A positive electrode active material precursor was prepared in the same manner as in Example 1 except that in the (second step), the stirring speed was reduced to 300 rpm, the pH of the reaction solution was reduced to 11.4, and the total reaction time was 29 hours.

**Example 4**

A positive electrode active material precursor was prepared in the same manner as in Example 1 except that in the (first step), quantitative injection was performed for 7 hours by reducing the flow rate of the transition metal-containing solution to 360 ml/hr and the flow rate of the 9 wt% ammonia water to 8 ml/hr, and in the (second step), the transition metal-containing solution was supplied at a flow rate of 750 ml/hr, the 9 wt% ammonia water was supplied at a flow rate of 11 ml/hr, the stirring speed was reduced to 300 rpm, the reaction was terminated when the average particle diameter D$_{50}$ of the precursor particles reached 3.2 μm, and the total reaction time was 32 hours.

**Comparative Example 1**

A positive electrode active material precursor was prepared in the same manner as in Example 1 except that in the (second step), the supply rate of the transition metal-containing solution was increased to 800 ml/hr, the pH of the reaction solution was reduced to 11.2, and the total reaction time was 22 hours.

**Comparative Example 2**

A positive electrode active material precursor was prepared in the same manner as in Example 1 except that in the (second step), the stirring speed was reduced to 250 rpm, the pH of the reaction solution was reduced to 11.3, and the total reaction time was 25 hours.

**Comparative Example 3**

A positive electrode active material precursor was prepared in the same manner as in Example 1 except that in the (first step), the supply rate of the 9 wt% ammonia water was increased to 12 ml/hr and the pH was reduced to 11.8, and in the (second step), the stirring speed was reduced to 300 rpm and the total reaction time was 27 hours.

**Comparative Example 4**

A positive electrode active material precursor was prepared in the same manner as in Example 1 except that in the (first step), the reaction was performed while quantitative injection was performed for 14 hours by reducing the supply rate of the transition metal-containing solution to 340 ml/hr and the supply rate of the 9 wt% ammonia water to 5.8 ml/hr, and in the (second step), the pH of the reaction solution was increased to 11.8, the supply rate of the 9 wt% ammonia water was increased to 12 ml/hr, and the total reaction time was 52 hours.

**Experimental Example 1** - **Evaluation of Precursor Powder Characteristics**

Average particle diameters $D_{50}$, BET specific surface areas, and pore area ratios (PAR) of the positive electrode active material precursors prepared in Examples 1 to 4 and Comparative Examples 1 to 4 were measured using the following methods. Measurement results are presented in Table 1 below.

(1) Average particle diameter $D_{50}$: Measured from a volume-based cumulative particle size distribution using a particle size analyzer (Microtrac S3500, Microtrac).
(2) BET specific surface area: The specific surface area was measured by a BET method in which the specific surface area was calculated from a nitrogen gas adsorption amount at a liquid nitrogen temperature (77K) using BELSORP-mini II by Bell Japan Inc.
(3) Pore area ratio (PAR): After impregnating the positive electrode active material precursor in a resin and curing the impregnated positive electrode active material precursor, particles of the positive electrode active material precursor were cut in a state in which cross sections may be observed by using a focused ion beam (FIB). Thereafter, a scanning electron microscope (SEM) was used to obtain SEM cross-sectional images of a plurality of the positive electrode active material precursor particles. For each of the obtained SEM cross-sectional images, a pore region of each positive electrode active material precursor particle was indicated as a shaded area, and a dense region of each positive electrode active material precursor particle was indicated as a white area using image analysis software WinRoof 6.1.1. For each of 20 or more arbitrary positive electrode active material precursor particles, a ratio (%) was calculated as [shaded area/(shaded area + white area) $\times$ 100], and the pore area ratio (PAR) was obtained by calculating an arithmetic mean value thereof.

[Table 1]

| | $D_{50}$ [unit: $\mu$m] | BET [unit: $m^2/g$] | Pore area ratio (PAR) (%) |
|---|---|---|---|
| Example 1 | 3.44 | 23.4 | 28.8 |
| Example 2 | 3.42 | 20.1 | 24.3 |
| Example 3 | 3.44 | 18.4 | 18.1 |
| Example 4 | 3.14 | 27.9 | 16.4 |
| Comparative Example 1 | 3.35 | 11.0 | 19.7 |
| Comparative Example 2 | 3.16 | 16.2 | 22.2 |
| Comparative Example 3 | 3.23 | 16.9 | 8.5 |
| Comparative Example 4 | 3.18 | 24.8 | 34.0 |

**Experimental Example 2** - **Precursor Particle Size Analysis**

The positive electrode active material precursors of Examples 1 to 4 and Comparative Examples 1 to 4 were collected, and a volume-based cumulative particle size distribution of the precursor particles generated in the reaction solution was measured using a particle size analyzer (Microtrac S3500, Microtrac).

A SPAN value defined by Equation (C): SPAN = $(D_{90}-D_{10})/D_{50}$ was calculated using the $D_{50}$ value measured in Experimental Example 1.

[Table 2]

|  | $D_{10}$ [unit: $\mu$m] | $D_{90}$ [unit: $\mu$m] | SPAN |
|---|---|---|---|
| Example 1 | 2.42 | 4.07 | 0.480 |
| Example 2 | 2.39 | 4.20 | 0.529 |
| Example 3 | 2.41 | 4.30 | 0.549 |
| Example 4 | 2.29 | 4.3 | 0.64 |
| Comparative Example 1 | 2.40 | 4.28 | 0.561 |
| Comparative Example 2 | 2.29 | 4.57 | 0.722 |
| Comparative Example 3 | 2.44 | 4.29 | 0.573 |
| Comparative Example 4 | 2.52 | 3.99 | 0.462 |

**<Positive Electrode Active Material Preparation>**

Each of the positive electrode active material precursors of Examples 1 to 4 and Comparative Examples 1 to 4, LiOH, and $Al_2O_3$ were mixed such that a molar ratio of (Ni+Co+Mn):Li:Al was 1.00:1.03:0.02 and then sintered at 740°C for 10 hours to prepare each of positive electrode active materials that were prepared using the positive electrode active material precursors of Examples 1 to 4 and Comparative Examples 1 to 4.

**Experimental Example 3** - **Positive Electrode Active Material Analysis**

(1) Degree of single crystal formation

For each of the prepared positive electrode active materials, a value obtained by "electron backscatter diffraction (EBSD) analysis" was substituted into Equation (A) below to calculate a degree of single crystal formation. The results thereof are presented in Table 3 below.

$$\text{Equation (A): Degree of single crystal formation} =$$

$$\frac{\sum_{i=1}^{n}\frac{4\pi}{3}\times R_i^3}{n}$$

In Equation (A), $R_i$ is a radius of an $i^{th}$ grain which is measured when an electrode prepared by using the positive electrode active material is subjected to an ion-milling treatment and a cross-section of the electrode is then analyzed by electron backscatter diffraction (EBSD), wherein $R_i$ is a value measured in $\mu$m units, but a value substituted into Equation (A) is a unitless number that does not include units, and n is the total number of grains measured by the electron backscatter diffraction (EBSD) analysis, wherein n is in a range of 200 to 500.

(2) I(003)/I(104)

For each of the prepared positive electrode active materials, a ratio of peak intensity I(003) of a (003) plane to peak intensity I(104) of a (104) plane was measured by "X-ray diffraction (XRD) analysis". The results thereof are presented in Table 3 below.

Specifically, a sample to be measured was fixed to a holder, X-ray diffraction analysis was performed using a fixed divergence slit (FDS) of 0.5° and a 2θ range of 10° to 90° under conditions, in which a step size was 0.014° and total scan time was about 40 minutes, using a Bruker D8-Endeavor (light source: Cu Kα, λ = 1.54 Å) equipped with a LynxEye XE-T position sensitive detector. Rietveld refinement was performed for the measured data in consideration of charge (metal ions at transition metal sites were +3, Ni ion at a Li site was +2) at each site and cation mixing. Instrumental broadening was considered by using Fundamental Parameter Approach (FPA) implemented in a Bruker TOPAS program, and entire peaks in the measurement range were used during fitting. A peak shape was fitted using only Lorentzian contribution as a first principle (FP) among peak types available in the TOPAS, and, in this case, strain was not considered.

(3) Particle size analysis of the positive electrode active material

Each of the prepared positive electrode active materials was collected, and a volume-based cumulative particle size distribution of the positive electrode active material particles generated in the reaction solution was measured using a particle size analyzer (Microtrac S3500, Microtrac).
A SPAN value defined by Equation (C): SPAN = $(D_{90}-D_{10})/D_{50}$ was calculated using $D_{90}$, $D_{50}$ and $D_{10}$ values of the measured positive electrode active material.

(4) Degree of single particle formation

For each of the prepared positive electrode active materials, a value obtained by "electron backscatter diffraction (EBSD) analysis" was substituted into Equation (B) below to calculate a degree of single particle formation. The results thereof are presented in Table 3 below.

$$\text{Equation (B):} \qquad \frac{\sum_{i=1}^{n} \frac{4\pi}{3} \times R_i^3}{n} \times \frac{1}{D_{50}}$$

In Equation (B), $R_i$ is a radius of an $i$th grain which is measured when an electrode prepared by using the positive electrode active material is subjected to an ion-milling treatment and a cross-section of the electrode is then analyzed by electron backscatter diffraction (EBSD), wherein $R_i$ is a value measured in $\mu$m units, but a value substituted into Equation (B) is a unitless number that does not include units, and n is the total number of grains measured by the electron backscatter diffraction (EBSD) analysis, wherein n is in a range of 200 to 500. Also, in Equation (B), $D_{50}$ is the $D_{50}$ of the positive electrode active material, and is a value measured in $\mu$m units, but a value substituted into Equation (B) is a unitless number that does not include units.

[Table 3]

| | Degree of single crystal formation | I(003)/I(104) | Particle size analysis | | | | Degree of single particle formation |
| --- | --- | --- | --- | --- | --- | --- | --- |
| | | | $D_{50}$ ($\mu$m) | $D_{90}$ ($\mu$m) | $D_{10}$($\mu$m) | SPAN | |
| Example 1 | 3.6 | 1.31 | 3.92 | 6.78 | 1.85 | 1.26 | 0.92 |
| Example 2 | 3.2 | 1.27 | 3.89 | 6.38 | 1.7 | 1.20 | 0.82 |
| Example 3 | 3.1 | 1.29 | 3.95 | 6.51 | 1.75 | 1.21 | 0.78 |
| Example 4 | 2.7 | 1.24 | 3.64 | 6.51 | 1.35 | 1.42 | 0.74 |
| Comparative Example 1 | 2.4 | 1.23 | 3.94 | 6.78 | 1.79 | 1.27 | 0.61 |
| Comparative Example 2 | 2.1 | 1.18 | 4.12 | 7.21 | 1.54 | 1.38 | 0.51 |
| Comparative Example 3 | 2.6 | 1.22 | 4.18 | 7.14 | 1.85 | 1.27 | 0.62 |
| Comparative Example 4 | 1.9 | 1.07 | 3.79 | 6.14 | 1.45 | 1.24 | 0.50 |

**<Lithium Secondary Battery Preparation>**

The positive electrode active material prepared from each of the positive electrode active material precursors prepared in Examples 1 to 4 and Comparative Examples 1 to 4, carbon black as a conductive agent, and polyvinylidene fluoride (PVDF), as a binder, were mixed in N-methyl-2-pyrrolidone (NMP) in a weight ratio of 95.0:2.5:2.5 to prepare a positive electrode slurry. One surface of an aluminum current collector was coated with the positive electrode slurry, dried at 130°C, and then rolled to prepare a positive electrode.
A negative electrode slurry was prepared by mixing artificial graphite as a negative electrode active material, carbon black as a conductive agent, and a styrene butadiene rubber (SBR)-carboxymethyl cellulose (CMC) composite, as a binder, in a weight ratio of 95.5:1.0:3.5, and one surface of a copper current collector was coated with the negative electrode slurry, dried at 100°C, and then rolled to prepare a negative electrode.

A lithium secondary battery was prepared by preparing an electrode assembly by disposing a separator between the positive electrode and the negative electrode, disposing the electrode assembly in a battery case, and then injecting an electrolyte solution into the case. The electrolyte solution was an electrolyte solution in which 1 M $LiPF_6$ was dissolved in a mixed organic solvent in which ethylene carbonate (EC) and ethyl methyl carbonate (EMC) were mixed in a volume ratio of 1:2.

**Experimental Example 4 - Output Characteristics**

After a formation process was performed on each of the above-prepared lithium secondary batteries, each lithium secondary battery was charged at 0.5C (standard capacity 1.0 C = 190 mAh/g) to 4.4 V in a constant current-constant voltage (CC-CV) mode at 45°C, and discharged at 0.1C to 2.5 V in a CC mode. Thereafter, discharge capacity was measured by changing the current to a 2.0C C-rate after charging the lithium secondary battery under the same conditions, and output characteristics were then calculated by calculating the discharge capacity at 2.0C relative to that at 0.1C. The calculated output characteristics (%) are presented in Table 4 below.

**Experimental Example 5 - High-temperature Life Characteristics**

Charging of each of the above-prepared lithium secondary batteries at 0.33C to 4.35 V in a CC-CV mode at 45°C and discharging of the lithium secondary battery at a constant current of 0.33C to 2.5 V were set as one cycle and after performing 200 cycles of the charging and discharging, capacity retention was calculated by measuring capacity after 200 charge and discharge cycles relative to capacity after the first charge and discharge cycle. The calculated capacity retention (%) is presented in Table 4.

[Table 4]

|  | Output characteristics (%) | Capacity retention (5) |
|---|---|---|
| Example 1 | 89.8 | 92 |
| Example 2 | 90.1 | 91.8 |
| Example 3 | 89.3 | 91.1 |
| Example 4 | 89.7 | 88.7 |
| Comparative Example 1 | 87.3 | 87.5 |
| Comparative Example 2 | 86.1 | 83.6 |
| Comparative Example 3 | 86.7 | 88.9 |
| Comparative Example 4 | 89.4 | 81.3 |

As shown in Table 4, it may be confirmed that output characteristics and high-temperature life characteristics of the lithium secondary batteries including the positive electrode active materials of Examples 1 to 4, which had been prepared by using the positive electrode active material precursor of the present invention, were better than those of the lithium secondary batteries of Comparative Examples 1 to 4.

**Claims**

1.   A positive electrode active material comprising at least one of a single particle composed of one nodule and a pseudo-single particle that is a composite of 30 or less nodules,

   wherein a degree of single crystal formation defined by Equation (A) is 2.7 or more.

Equation (A): Degree of single crystal formation =

$$\frac{\sum_{i=1}^{n} \frac{4\pi}{3} \times R_i^3}{n}$$

wherein, in Equation (A),

$R_i$ is a radius of an $i^{th}$ grain which is measured when an electrode prepared by using the positive electrode active material is subjected to an ion-milling treatment and a cross-section of the electrode is analyzed by electron backscatter diffraction (EBSD), wherein $R_i$ is a value measured in $\mu$m units, but a value substituted into Equation (A) is a unitless number that does not include units, and

n is the total number of grains measured by the electron backscatter diffraction (EBSD) analysis.

2. The positive electrode active material of claim 1, wherein the degree of single crystal formation is 2.8 or more.

3. The positive electrode active material of claim 1, wherein the degree of single crystal formation is 3.2 or more.

4. The positive electrode active material of claim 1, wherein a degree of single particle formation defined by Equation (B) is 0.65 or more.

Equation (B): Degree of single particle formation =

$$\frac{\sum_{i=1}^{n} \frac{4\pi}{3} \times R_i^3}{n} \times \frac{1}{D_{50}}$$

wherein, in Equation (B),

$R_i$ is a radius of an $i^{th}$ grain which is measured when an electrode prepared by using the positive electrode active material is subjected to an ion-milling treatment and a cross-section of the electrode is analyzed by electron backscatter diffraction (EBSD), wherein $R_i$ is a value measured in $\mu$m units, but a value substituted into Equation (B) is a unitless number that does not include units,

n is the total number of grains measured by the electron backscatter diffraction (EBSD) analysis, and

$D_{50}$ is $D_{50}$ of the positive electrode active material, and is a value measured in $\mu$m units, but a value substituted into Equation (B) is a unitless number that does not include units.

5. The positive electrode active material of claim 4, wherein the degree of single particle formation is 0.75 or more.

6. The positive electrode active material of claim 1, wherein nickel among total metals excluding lithium is included in an amount of 50 mol% or more.

7. The positive electrode active material of claim 1, wherein I(003)/I(104) is 1.24 or more.

8. A positive electrode comprising the positive electrode active material of claim 1.

9. An electrochemical device comprising the positive electrode of claim 8.

10. A positive electrode active material precursor having:

a Brunauer-Emmett-Teller (BET) specific surface area of greater than 16 m$^2$/g,
a SPAN defined by Equation (C) of 0.7 or less, and
a pore area ratio (PAR) of 10% to 30%.

Equation (C): SPAN = $(D_{90}-D_{10})/D_{50}$

wherein, in Equation (C),

$D_{90}$ represents a particle diameter at 90% of cumulative distribution of volume according to the particle diameter of the positive electrode active material precursor which is measured by laser diffraction,

$D_{50}$ represents a particle diameter at 50% of the cumulative distribution of volume according to the particle diameter of the positive electrode active material precursor which is measured by laser diffraction, and

$D_{10}$ represents a particle diameter at 10% of the cumulative distribution of volume according to the particle diameter of the positive electrode active material precursor which is measured by laser diffraction.

**11.** The positive electrode active material precursor of claim 10, wherein the BET specific surface area is in a range of 18 $m^2$/g to 27 $m^2$/g.

**12.** The positive electrode active material precursor of claim 10, wherein the BET specific surface area is in a range of 19 $m^2$/g to 25 $m^2$/g.

**13.** The positive electrode active material precursor of claim 10, wherein the SPAN is in a range of 0.20 to 0.60.

**14.** The positive electrode active material precursor of claim 10, wherein the SPAN is in a range of 0.40 to 0.54.

**15.** The positive electrode active material precursor of claim 10, wherein the pore area ratio (PAR) is in a range of 17% to 30%.

**16.** The positive electrode active material precursor of claim 10, wherein the pore area ratio (PAR) is in a range of 19% to 29%.

**17.** The positive electrode active material precursor of claim 10, wherein nickel among total metals is included in an amount of 50 mol% or more.

**18.** The positive electrode active material precursor of claim 10, wherein the average particle diameter $D_{50}$ is greater than 2.0 $\mu$m and equal to or less than 5.0 $\mu$m.

**19.** A method of preparing a positive electrode active material precursor, the method comprising:

a first step of forming positive electrode active material precursor nuclei by performing a co-precipitation reaction while supplying a transition metal-containing solution, an ammonium cationic complexing agent, and a basic solution to a reactor; and

a second step of growing positive electrode active material precursor particles by performing a co-precipitation reaction while supplying a transition metal-containing solution, an ammonium complexing agent, and a basic solution to a reaction solution in which the positive electrode active material precursor nuclei have been formed, wherein the ammonium cationic complexing agent in the first step is supplied at a flow rate of 6 mL/hr to 11 mL/hr, and

a pH of the reaction solution in the second step is 11.4 or more.

**20.** The method of claim 19, wherein the transition metal-containing solution in the second step is supplied at a flow rate of 730 mL/hr or less.

**21.** The method of claim 19, wherein the second step is performed for 33 hours or more.

## INTERNATIONAL SEARCH REPORT

| International application No. |
| --- |
| **PCT/KR2025/013315** |

| A. | CLASSIFICATION OF SUBJECT MATTER |
| --- | --- |

**H01M 4/525**(2010.01)i; **H01M 4/505**(2010.01)i; **H01M 4/131**(2010.01)i; **H01M 10/052**(2010.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/525(2010.01); H01M 10/052(2010.01); H01M 2/10(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 양극 활물질 (cathode active material), 전구체 (precursor), 단입자 (single particle), 단결정화도 (degree of single crystallinity), 공침 (co-precipitation), 암모늄양이온 착물형성제 (ammonium complexing agent)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2017-095153 A1 (LG CHEM, LTD.) 08 June 2017 (2017-06-08)<br>abstract; paragraphs [21], [73]-[75], [77], [79]-[82], [152], [167], [197]-[200], [204]; claims 1, 7 | 1-21 |
| A | KR 10-1883406 B1 (RESEARCH INSTITUTE OF INDUSTRIAL SCIENCE & TECHNOLOGY) 30 July 2018 (2018-07-30)<br>abstract; claims 1-38 | 1-21 |
| A | KR 10-2021-0150863 A (SK INNOVATION CO., LTD.) 13 December 2021 (2021-12-13)<br>abstract; claims 1-10 | 1-21 |
| A | KR 10-2023-0033480 A (SAMSUNG SDI CO., LTD.) 08 March 2023 (2023-03-08)<br>abstract; claims 1-28 | 1-21 |
| A | KR 10-2019-0121394 A (UMICORE et al.) 25 October 2019 (2019-10-25)<br>abstract; claims 1-16 | 1-21 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **28 November 2025** | **30 November 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| International application No. |
| --- |
| **PCT/KR2025/013315** |

| Patent document cited in search report | | | Publication date (day/month/year) | Patent family member(s) | | | Publication date (day/month/year) |
| --- | --- | --- | --- | --- | --- | --- | --- |
| WO | 2017-095153 | A1 | 08 June 2017 | CN | 108140829 | A | 08 June 2018 |
| | | | | CN | 108140829 | B | 18 June 2021 |
| | | | | EP | 3386015 | A1 | 10 October 2018 |
| | | | | EP | 3386015 | B1 | 19 February 2025 |
| | | | | ES | 3027649 | T3 | 16 June 2025 |
| | | | | HU | E070830 | T2 | 28 July 2025 |
| | | | | JP | 2018-532236 | A | 01 November 2018 |
| | | | | JP | 7114148 | B2 | 08 August 2022 |
| | | | | KR | 10-1989399 | B1 | 17 June 2019 |
| | | | | KR | 10-2017-0063408 | A | 08 June 2017 |
| | | | | PL | 3386015 | T3 | 09 June 2025 |
| | | | | US | 11081694 | B2 | 03 August 2021 |
| | | | | US | 11581538 | B2 | 14 February 2023 |
| | | | | US | 2018-0261842 | A1 | 13 September 2018 |
| | | | | US | 2021-0313573 | A1 | 07 October 2021 |
| KR | 10-1883406 | B1 | 30 July 2018 | None | | | |
| KR | 10-2021-0150863 | A | 13 December 2021 | CN | 113764656 | A | 07 December 2021 |
| | | | | CN | 113764656 | B | 16 April 2024 |
| | | | | EP | 3919444 | A2 | 08 December 2021 |
| | | | | EP | 3919444 | A3 | 15 December 2021 |
| | | | | US | 2021-0384502 | A1 | 09 December 2021 |
| KR | 10-2023-0033480 | A | 08 March 2023 | CN | 115732652 | A | 03 March 2023 |
| | | | | EP | 4144703 | A1 | 08 March 2023 |
| | | | | JP | 2023-036062 | A | 13 March 2023 |
| | | | | JP | 7498233 | B2 | 11 June 2024 |
| | | | | US | 2023-0082796 | A1 | 16 March 2023 |
| KR | 10-2019-0121394 | A | 25 October 2019 | CN | 110663127 | A | 07 January 2020 |
| | | | | CN | 110663127 | B | 07 February 2023 |
| | | | | EP | 3596766 | A1 | 22 January 2020 |
| | | | | EP | 3596766 | A4 | 18 November 2020 |
| | | | | JP | 2020-510981 | A | 09 April 2020 |
| | | | | JP | 6985406 | B2 | 22 December 2021 |
| | | | | KR | 10-2322728 | B1 | 05 November 2021 |
| | | | | US | 11476461 | B2 | 18 October 2022 |
| | | | | US | 2020-0006769 | A1 | 02 January 2020 |
| | | | | WO | 2018-167533 | A1 | 20 September 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240117211